# EUROPÄISCHE PATENTSCHRIFT

(11) **EP 2 886 242 B1**
(45) Veröffentlichungstag und Bekanntmachung des Hinweises auf die Patenterteilung: **14.09.2016**
(21) Anmeldenummer: 13198967.5
(22) Anmeldetag: 20.12.2013
(51) Int. Cl.: B23K 26/30, F16P 1/06, B23K 37/00

(54) **Laserbearbeitungsmaschinen-Anordnung, insbesondere mit barrierefreiem Zugang**
Laser processing machine assembly, in particular with barrier free access
Dispositif de machines d'usinage au laser, notamment avec un accès sans barrière

(43) Veröffentlichungstag der Anmeldung: 24.06.2015
(73) Patentinhaber: TRUMPF Werkzeugmaschinen GmbH + Co. KG, 71254 Ditzingen (DE)
(72) Erfinder: Bunz, Andreas, 71771 Leinfelden-Echterdingen (DE); Breitling, Detlef, 71229 Leonberg (DE)
(74) Vertreter: Kohler Schmid Möbus Patentanwälte

(56) Entgegenhaltungen:
- DE-B3-102010 042 564
- DE-U1- 29 905 817
- GB-A- 2 182 746
- JP-A- 2000 024 785
- ZÄH M ET AL: "Entwicklung technischer Anlagensicherhaeitskonzepte für Hochleistungslaser der neuesten Generation", SCHWEISSEN UND SCHNEIDEN, DVS VERLAG, DUSSELDORF, DE, Bd. 63, Nr. 3, 1. März 2011 (2011-03-01), Seiten 108-112, XP001560586, ISSN: 0036-7184

## Beschreibung

Die Erfindung betrifft eine Laserbearbeitungsmaschinen-Anordnung, umfassend
- einen Laserbearbeitungskopf zur Laserbearbeitung eines Werkstücks,
   wobei im Betrieb des Laserbearbeitungskopfs von einer Bearbeitungszone am Werkstück radial Laserstrahlung ausgeht,
- eine Laserschutzwand, welche den Laserbearbeitungskopf und einen Gefahrenbereich um den Laserbearbeitungskopf umgibt, und welche die im Betrieb radial von der Bearbeitungszone ausgehende Laserstrahlung abschirmt, und
- wenigstens eine Öffnung in der Laserschutzwand, durch die der Gefahrenbereich betreten werden kann.

Eine solche Laserbearbeitungsmaschinen-Anordnung ist beispielsweise aus dem Firmenprospekt "Combined punching and fiber laser cutting", Prima Industrie S.p.A. Collegno (IT) und Finn-Power Ox, Kauhava (FI), mit Drucklegung September 2010 sowie aus XP 00 1560586, JP 2000 024785 A, GB 2 182 746 A, DE 10 2010 042564 B und DE 29905817 U, bekannt geworden.

Durch Laserbearbeitungsverfahren, insbesondere Laserschneiden und Laserschweißen, können Werkstücke, insbesondere Bleche, hoch präzise bearbeitet werden. Allerdings müssen bei der Laserbearbeitung Personen in der Umgebung vor der Laserstrahlung geschützt werden.

Laserstrahlung kann insbesondere die Augen von Personen schädigen. Dabei ist nicht nur eine unmittelbare Bestrahlung mit dem Laserstrahl gefährlich; auch Streulicht, das von einer Bearbeitungszone (dem belichtetem Bereich) am Werkstück ausgeht, kann zu dauerhaften Schädigungen im Bereich von Netzhaut oder Pupille führen. Eine besondere Gefahr geht dabei von Lasern im nicht sichtbaren Strahlungsbereich, insbesondere Infrarot-Lasern aus, da der Lichteinfall ins Auge nicht sofort bemerkt wird und insbesondere den Lidschlussreflex nicht auslöst.

Zum Schutz von Bedienpersonal ist es bekannt, lokal am Laserbearbeitungskopf einer Laserbearbeitungsmaschine eine Abschirmung, auch interne Abschirmung genannt, anzuordnen. Aus der WO 2011/045098 A1 ist beispielsweise eine lokale Abschirmungsvorrichtung an einem Laserbearbeitungskopf mit zwei gegeneinander bewegbaren, bürstenartigen Abschirmungseinheiten bekannt geworden.

Lokale Abschirmungen können das von einer Bearbeitungszone sich radial (in gerader Richtung) ausbreitende Laserlicht nur in langsamen Betriebsmoden, nicht aber in schnellen Betriebsmoden mit der für die Augensicherheit von Bedienpersonal in der Umgebung erforderlichen Zuverlässigkeit abschirmen, so dass die Laserbearbeitungsmaschine oftmals zusätzlich mit einer externen Abschirmung versehen wird. Die externe Abschirmung umfasst eine Laserschutzwand aus für die verwendete Laserstrahlung undurchlässigem Material (meist Metallblech, aber auch Holz oder Spezialscheiben), die den Laserbearbeitungskopf und zumindest einen Teil der Laserbearbeitungsmaschine umgibt. Der innerhalb der Laserschutzwand liegende Raum wird auch als Gefahrenbereich bezeichnet, weil er grundsätzlich von gestreuter Laserstrahlung durchstrahlt werden kann.

Aus der eingangs erwähnten Firmendruckschrift "Combined punching and laser cutting" ist es bekannt geworden, eine Laserbearbeitungsmaschine mit einer geschlossenen Maschinenkabine einzuhausen. Dadurch wird sowohl ein Austritt von Laserstrahlung zuverlässig verhindert, als auch die Lärmbelastung in der Umgebung gesenkt. Der Zugang zur Laserbearbeitungsmaschine für Bedienpersonal, etwa für Rüstprozesse am Laserbearbeitungskopf, erfolgt durch Türen, die während des Betriebs des Laserbearbeitungskopfs (d.h. des dortigen Lasers) geschlossen sein müssen.

Eine ähnliche externe Abschirmung ist auch aus dem Firmenprospekt "TruMatic 3000 fiber: Kombination hoch drei." der Trumpf Werkzeugmaschinen GmbH + Co. KG, Ditzingen, DE, heruntergeladen im Internet am 17.12.2013, bekannt geworden. Die dortige Laserbearbeitungs- und Stanzmaschine ist rundum mit einer Laserschutzwand umgeben, die für ein Betreten des Gefahrenbereichs durch Personen beispielsweise an Teleskoptüren geöffnet werden muss.

Nachteilig an diesem Stand der Technik ist es, dass für das Betreten des Gefahrenbereichs durch Personen Türen, Tore oder dergleichen geöffnet werden müssen. Nach Abschluss von manuellen Arbeiten an der Laserbearbeitungsmaschine müssen vor der Fortsetzung des Betriebs des Laserbearbeitungskopfs diese Türen wieder verschlossen werden, um die Lasersicherheit zu gewährleisten. Ein manuelles Öffnen dieser Türen ist zeitaufwändig und mühsam, insbesondere wenn dafür eine freie Hand oder gar beide Hände benötigt werden. Automatische Türöffnungssysteme sind teuer, und verzögern meist ebenfalls den Zugang zur Laserbearbeitungsmaschine, d.h. zum Gefahrenbereich, und insbesondere zum Laserbearbeitungskopf.

### Aufgabe der Erfindung

Der Erfindung liegt die Aufgabe zugrunde, einen verbesserten Zugang zum Gefahrenbereich, insbesondere zum Laserbearbeitungskopf, einer Laserbearbeitungsmaschine, die mit einer externen Abschirmung versehen ist, zu ermöglichen.

### Kurze Beschreibung der Erfindung

Diese Aufgabe wird gelöst durch eine Anordnung der eingangs genannten Art, die dadurch gekennzeichnet ist, dass die Laserschutzwand und die wenigstens eine Öffnung in der Laserschutzwand so angeordnet sind, dass die wenigstens eine Öffnung mittels der Laserschutzwand oder unter Mitwirkung der Laserschutzwand von der im Betrieb des Laserbearbeitungskopfs von der Bearbeitungszone radial ausgehenden Laserstrahlung vollständig abgeschattet ist.

Die vorliegende Erfindung schlägt vor, die Laserschutzwand mit wenigstens einer Öffnung zu versehen, die so in der Laserschutzwand platziert ist, dass sie von der Bearbeitungszone, von der im Betrieb des Laserbearbeitungskopf die gestreute Laserstrahlung radial (in gerader Richtung) ausgeht, vollständig abgeschattet ist. Die Öffnung wird dabei zumindest zum Teil, und typischerweise vollständig, durch Teilabschnitte der Laserschutzwand abgeschattet. Eine solche Öffnung wird im Folgenden auch als "abgeschattete Öffnung" bezeichnet.

Die Laserschutzwand dient hier also nicht nur zur Abtrennung des Gefahrenbereichs (Laserschutzbereich) vom Personenbereich. Die Laserschutzwand ist durch die Anordnung von Teilabschnitten relativ zur Bearbeitungszone auch in der Lage, einen oder mehrere Zwischenräume einzurichten, zu denen das Licht, welches sich in gerader Richtung von der Bearbeitungszone aus ausbreitet und von Teilabschnitten der Laserschutzwand blockiert wird, nicht gelangen kann. Mit den Teilabschnitten der Laserschutzwand kann also ein "optisches Labyrinth" eingerichtet werden, das eine Propagation zu der wenigstens einen abgeschatteten Öffnung verhindert.

Bevorzugt ist die Laserschutzwand so eingerichtet, dass sie durch aneinander anschließende oder voneinander abgesetzte, aber überlappende Teilabschnitte azimutal (bzgl. dem Azimutwinkel ϕ in Kugelkoordinaten, mit der horizontalen Ebene durch die Bearbeitungszone als Bezugsebene) die Bearbeitungszone vollständig (über 360°) umschließt; an einer Überlappungsstelle kann ein abgeschatteter Zwischenraum bzw. eine abgeschattete Öffnung leicht eingerichtet werden. Die Laserschutzwand schirmt polar (bzgl. dem Polarwinkel θ in Kugelkoordinaten) zumindest den Winkelbereich ab, in welchem aufgrund der Gestalt von Werkstück (ggf. unter Berücksichtigung von Werkstückzuführungen) und Laserbearbeitungskopf (ggf. unter Berücksichtigung einer lokal abschattenden Ummantelung) gestreutes Laserlicht erwartet werden muss; dies ist meist nur in einem θ-Bereich von ca. +/-15° oder weniger um die horizontale Ebene herum der Fall. Es ist aber auch möglich, dass die Laserschutzwand ggf. zusammen mit einer Laserschutzdecke oder Raumdecke und dem Boden eine vollständige polare Abschirmung einrichtet.

Eine erfindungsgemäß abgeschattete Öffnung benötigt keinerlei laserstrahlungsdichte Versiegelung (etwa durch eine Tür), um die Lasersicherheit in der Umgebung um den Gefahrenbereich, die auch als Personenbereich bezeichnet wird, sicherzustellen. Da die abgeschattete Öffnung ohnehin nicht der gestreuten Laserstrahlung ausgesetzt ist, würde eine solche Versiegelung die Lasersicherheit im Personenbereich nicht weiter verbessern.

Eine erfindungsgemäße, abgeschattete Öffnung kann leicht als Zugang zum Gefahrenbereich (selbstverständlich nach Abschaltung des Laserbearbeitungskopfs) genutzt werden, etwa für Rüstprozesse. Grundsätzlich ist es nicht erforderlich, eine Tür, ein Tor oder dergleichen an der Öffnung vor dem Betreten des Gefahrenbereichs zu öffnen oder eine Tür an der Öffnung nach Verlassen des Gefahrenbereichs zu schließen. Es sollte allerdings durch geeignete Maßnahmen sichergestellt werden, das bei Betreten des Gefahrenbereichs, insbesondere durch eine erfindungsgemäße, abgeschattete Öffnung ohne Tür, der Laserbearbeitungskopf abgeschaltet ist oder wird. Dafür können Überwachungssysteme eingesetzt werden, die geeignete Maßnahmen (in der Regel eine Abschaltung des Laserbearbeitungskopfs, d.h. des Laserstrahls, über den sicheren Kanal der Maschinensteuerung) vor oder bei Betreten des Gefahrenbereichs vorsehen.

Man beachte, dass die Laserschutzwand auch zusätzliche, nicht abgeschattete Öffnungen aufweisen kann, die dann mit Türen aus laserdichtem Material versehen sein sollten, wobei beim Öffnen einer solchen Tür eine Abschaltung des Laserbearbeitungskopfs sichergestellt sein sollte.

Der Gefahrenbereich enthält den Laserbearbeitungskopf und zumindest einen Teil der Laserbearbeitungsmaschine; typischerweise ist die Laserbearbeitungsmaschine vollständig im Gefahrenbereich angeordnet. Insbesondere ist in der Regel zumindest ein Teil einer Werkstückzuführung und ein gerade in Laserbearbeitung befindliches Werkstück vollständig im Gefahrenbereich enthalten.

### Bevorzugte Ausführungsformen der Erfindung

### Ausführungsformen betreffend die wenigstens eine abgeschattete Öffnung

Bei einer besonders vorteilhaften Ausführungsform einer der erfindungsgemäßen Laserbearbeitungsmaschinen-Anordnung ist die wenigstens eine abgeschattete Öffnung barrierefrei ausgebildet. Für den Zugang zum Gefahrenbereich braucht dann keine Barriere geöffnet zu werden, was besonders bedienerfreundlich, zeitsparend und baulich einfach ist. Insbesondere ist keine Tür vorgesehen, welche die Öffnung während des Betriebs des Laserbearbeitungskopfes versperrt. Alternativ kann beispielsweise eine sich bei Annäherung automatisch öffnende Tür an der Öffnung vorgesehen sein, wobei die zugehörige Automatik autark eingerichtet werden kann. Diese Türe braucht nicht laserstrahlungsdicht zu sein.

Bevorzugt ist auch eine Ausführungsform, bei der die wenigstens eine abgeschattete Öffnung bodentief und wenigstens 2,20 m hoch oder nach oben offen ist. Dadurch kann eine Person aufrecht gehend und ohne Stolpergefahr die Öffnung als Zugang zum Gefahrenbereich nutzen.

Vorteilhaft ist weiterhin eine Ausführungsform, die vorsieht, dass die wenigstens eine abgeschattete Öffnung bezüglich der Bearbeitungszone zumindest teilweise hinter einem abschattenden Teilabschnitt der Laserschutzwand liegt,
insbesondere wobei die abgeschattete Öffnung einen bezüglich des Abstands zur Bearbeitungszone vorderen Rand und hinteren Rand aufweist, und der vordere Rand und der angrenzende Teilabschnitt der Laserschutzwand die Öffnung bis zum hinteren Rand abschattet. Diese Ausführungsform ist baulich besonders einfach. Bevorzugt liegt die abgeschattete Öffnung vollständig hinter einem abschattenden Teilabschnitt der Laserschutzwand. Man beachte, dass Teile der Öffnung beispielsweise auch durch das Werkstück oder eine Werkstückzuführung oder den Laserbearbeitungskopf oder eine Ummantelung des Laserbearbeitungskopfs abgeschattet werden können, sodass dort eine Abschattung durch die Laserschutzwand nicht notwendig ist. Der abschattende Teilabschnitt weist typischerweise eine im Wesentlichen vertikalen Kante auf. Die Ränder sind typischerweise vertikal ausgerichtet, und der Abstand von der Bearbeitungszone wird in der horizontalen Ebene betrachtet.

### Ausführungsformen betreffend das Überwachungssystem

Eine besonders bevorzugte Ausführungsform ist dadurch gekennzeichnet, dass ein *Überwachungssystem* vorgesehen ist, welches ein Betreten eines Kontrollbereichs, welcher zumindest den Gefahrenbereich umfasst, registriert, und dass das Überwachungssystem dazu ausgebildet ist, den Laserbearbeitungskopf automatisch abzuschalten, wenn es ein Betreten des Kontrollbereichs registriert. Durch das *Überwachungssystem* wird die Augensicherheit von Personen, die den Gefahrenbereich betreten, sichergestellt. Man beachte, dass das Überwachungssystem redundant ausgebildet sein sollte, um bei Ausfall einzelner Komponenten des Überwachungssystems weiter die Augensicherheit der eintretenden Personen zu gewährleisten. Typischerweise wird bei Betreten des Kontrollbereichs auch eine etwaige Maschinenbewegung (etwa Werkstücktransport) im Kontrollbereich bzw. Gefahrenbereich gestoppt. Das *Überwachungssystem* kann entweder einen oder mehrere Grenzabschnitte, durch die der Kontrollbereich (und der Gefahrenbereich) betreten werden kann, überwachen, meist mit vertikal ausgerichteten Lichtgittern, und/oder das *Überwachungssystem* überwacht den Kontrollbereich (und den Gefahrenbereich) insgesamt, meist mit horizontal ausgerichteten Lichtgittern oder Belastungssensoren, die das Gewicht eines auf sie tretenden Menschen registrieren. Der Kontrollbereich kann mit dem Gefahrenbereich zusammenfallen. Es ist aber auch möglich, den Kontrollbereich größer zu wählen als den Gefahrenbereich. Dann wird bereits eine (unerlaubte) Annäherung an den Gefahrenbereich, etwa vor einer abgeschatteten Öffnung, zur Abschaltung des Laserbearbeitungskopfs herangezogen. Eine Überwachung des Zugangs zu einem Kontrollbereich, der im Wesentlichen unabhängig von der Laserschutzwand und ihren Öffnungen eingerichtet ist, ist in der Regel besonders einfach zu realisieren, insbesondere optisch, etwa mit Lichtschranken oder Lichtgittern.

Bei einer vorteilhaften Weiterbildung dieser Ausführungsform ist das *Überwachungssystem* ein optisches Überwachungssystem, insbesondere wobei das optische *Überwachungssystem* ein Lichtgitter umfasst. Optische *Überwachungssystem* sind vergleichsweise einfach zu installieren und zuverlässig zu betreiben. Man beachte, dass für verschiedene Grenzabschnitte (d.h. Zugänge zum Kontrollbereich) lokale, voneinander unabhängige Subüberwachungssysteme (mit eigenem Sender und eigenem Empfänger) vorgesehen sein können, oder auch für mehrere oder alle Grenzabschnitte ein integriertes *Überwachungssystem* mit nur einem Sender und einem Empfänger vorgesehen sein kann, insbesondere wobei ein Kontrollstrahl über alle Grenzabschnitte geleitet wird, und dessen Unterbrechung ein Betreten an irgendeinem der einbezogenen Grenzabschnitte indiziert. Ein Lichtgitter hat im Rahmen der Erfindung bevorzugt eine Auflösung bzw. einen Maximalabstand von 120 mm oder weniger, besonders bevorzugt 90 mm oder weniger; dies gewährt eine besonders zuverlässige Abschaltung, auch wenn nur ein einzelnes Körperteil (etwa der Kopf) in den Gefahrenbereich eindringt. Ebenso können Lichtschranken eingesetzt werden.

Vorteilhaft ist eine Weiterbildung, bei der das Überwachungssystem wenigstens einen Grenzabschnitt des Kontrollbereichs überwacht, wobei das *Überwachungssystem* einen Betrieb des Laserbearbeitungskopfs nur gestattet, solange der wenigstens eine Grenzabschnitt als frei gemeldet ist, und der Laserbearbeitungskopf automatisch abgeschaltet wird, sobald der wenigstens eine Grenzabschnitt durchtreten wird. Eine Überwachung auf Basis von Grenzabschnitten (Zugängen zum Kontrollbereich) ist im Vergleich zu einer räumlichen Überwachung des gesamten Kontrollbereichs sehr viel einfacher zu realisieren. Ein Grenzabschnitt kann insbesondere durch eine abgeschattete Öffnung in der Laserschutzwand ausgebildet sein, wobei das Überwachungssystem bei Betreten des Gefahrenbereichs durch die Öffnung (also bei Durchtreten der Öffnung) den Laserbearbeitungskopf automatisch abschaltet. Alternativ kann ein Grenzabschnitt einer abgeschatteten Öffnung in der Laserschutzwand vorgelagert sein. Ein Grenzabschnitt ist typischerweise eben ausgebildet und vertikal ausgerichtet. Man beachte, dass der Laserbearbeitungskopf den Betrieb erst wieder aufnehmen darf, wenn sowohl alle Grenzabschnitte als frei gemeldet sind, als auch zusätzlich geprüft worden ist, dass alle Personen den Gefahrenbereich verlassen haben. Dafür kann insbesondere vorgesehen sein, dass die Person, die den Kontrollbereich betreten hat, von außerhalb des Kontrollbereichs quittieren muss, dass sie den Kontrollbereich verlassen hat, etwa durch einen Tastendruck.

Eine besonders bevorzugte Weiterentwicklung hierzu sieht vor, dass ein Grenzabschnitt durch eine abgeschattete Öffnung ausgebildet ist, dass ein beweglicher Teilabschnitt der Laserschutzwand, welcher diese abgeschattete Öffnung mitbegrenzt, zwischen einer geöffneten Stellung und einer geschlossenen Stellung verfahrbar oder verschwenkbar ist, wobei in der geöffneten Stellung ein im Vergleich zur abgeschatteten Öffnung vergrößerter Zugang zum Gefahrenbereich eröffnet ist, und in der geschlossenen Stellung der Zugang zum Gefahrenbereich auf die abgeschattete Öffnung beschränkt ist,
und dass das Überwachungssystem die Meldung dieses Grenzabschnitts als frei nur gestattet, wenn der bewegliche Teilabschnitt in der geschlossenen Stellung ist. Durch den beweglichen Teilabschnitt kann zeitweilig ein vergrößerter Zugang zum Gefahrenbereich zur Verfügung gestellt werden, etwa um schweres Reparaturgerät oder sperrige Werkstücke zu verbringen. Der bewegliche Teilabschnitt ist in aller Regel nicht von gestreuter Laserstrahlung abgeschattet, so dass bei geöffnetem Teilabschnitt eine Abschaltung des Laserstrahls erfolgen muss. Wenn die zugehörige abgeschattete Öffnung nur freigemeldet werden kann, wenn der benachbarte, bewegliche Teilabschnitt geschlossen ist, wird dadurch eine implizite, besonders einfache Absicherung des temporären Zugangs am beweglichen Teilabschnitt erreicht.

Vorteilhafter Weise ist dabei vorgesehen, dass das Überwachungssystem zwei Teilgeräte, insbesondere ein Sendergerät und ein Empfängergerät, aufweist, und eines dieser Teilgeräte am beweglichen Teilabschnitt der Laserschutzwand, insbesondere am Rand der abgeschatteten Öffnung, angeordnet ist, und das andere dieser Teilgeräte an einem unbeweglichen Teilabschnitt der Laserschutzwand, insbesondere am gegenüberliegenden Rand der abgeschatteten Öffnung, angeordnet ist. Dieser Aufbau hat sich praktisch bewährt und ist einfach zu realisieren. Typischerweise ist diese Variante mit einem optischen *Überwachungssystem* realisiert. Nur in der geschlossenen Stellung des beweglichen Teilabschnitts der Laserschutzwand ist das Empfängergerät in einer Position, in der es einen oder mehrere ununterbrochene Kontrollstrahlen vom Sendergerät registrieren kann, was die Meldung der Öffnung als frei bedingt. Eines der Teilgeräte kann auch ein Reflektor sein, und das andere Teilgerät ein kombiniertes Sende- und Empfangsgerät.

Bei einer vorteilhaften Weiterbildung ist ein Vorwarnsystem vorgesehen, welches einen vor einem Grenzabschnitt gelegenen Vorwarnabschnitt überwacht und bei Durchtreten des Vorwarnabschnitts ein optisches und/oder akustisches Vorwarnsignal abgibt, insbesondere wobei der Vorwarnabschnitt wenigstens 40 cm von dem Grenzabschnitt beabstandet ist. Durch das Vorwarnsystem kann ein versehentliches Betreten des Kontrollbereichs, welches eine Unterbrechung der Werkstückbearbeitung bewirken würde, verhindert werden. Wenn die den Vorwarnabschnitt durchtretende Person das Vorwarnsignal bemerkt, kann sie noch innehalten, bevor sie den Kontrollbereich betritt, und damit die Unterbrechung der Werkstückbearbeitung abwenden. Der Vorwarnabschnitt ist typischerweise eben ausgebildet und vertikal ausgerichtet. Das Vorwarnsystem ist meistens optisch realisiert, etwa mit einer Lichtschranke.

Besonders bevorzugt ist eine Weiterbildung, die vorsieht, dass wenigstens ein beweglicher Laserschutzschild vorgesehen ist, wobei in einer ausgefahrenen Stellung des Laserschutzschilds ein Teilbereich des Kontrollbereichs, der auch einen Teilbereich des Gefahrenbereichs umfasst, von der im Betrieb des Laserbearbeitungskopfs von der Bearbeitungszone radial ausgehenden Laserstrahlung vollständig abgeschattet ist,
und dass das *Überwachungssystem* so eingerichtet ist, dass es mit dem Laserschutzschild in der ausgefahrenen Stellung bei Betreten des Teilbereichs des Kontrollbereichs den Laserbearbeitungskopf nicht automatisch abschaltet, insbesondere wobei vom Teilbereich des Kontrollbereichs aus der übrige Kontrollbereich zumindest mit dem Laserschutzschild in der ausgefahrenen Stellung nicht betreten werden kann. Dadurch kann der durch den Laserschutzschild abschattbare Teilbereich des Kontrollbereichs hauptzeitparallel, d.h. während einer Laserbearbeitung im übrigen Kontrollbereich, betreten werden, etwa für die Bereitstellung von zu bearbeitenden Werkstücken oder für die Entnahme von fertig bearbeiteten Werkstücken. Dadurch kann die Laserbearbeitungsmaschine besonders hoher Auslastung benutzt werden. Vorteilhafter Weise ist ein Automatisierungssystem (Werkstücktransportsystem) vorgesehen, das Werkstücke mit dem Laserschutzschild in einer eingefahrenen Stellung vom abschattbaren Teilbereich des Kontrollbereichs in den übrigen Kontrollbereich verbringen kann oder umgekehrt. Mit dem Laserschutzschild in einer eingefahrenen Stellung ist jedoch der besagte Teilbereich im Allgemeinen nicht von gestreuter Laserstrahlung abgeschattet, so dass mit dem Laserschutzschild in der eingefahrenen Stellung auch der besagte Teilbereich des Kontrollbereichs überwacht bzw. frei von Personen gehalten werden muss.

### Weitere Ausführungsformen

Bevorzugt ist auch eine Ausführungsform, bei der die Laserschutzwand weiterhin wenigstens eine mit einer Laserschutztür absperrbare, zusätzliche Öffnung umfasst, durch die der Gefahrenbereich betreten werden kann, und ein Schutzsystem vorgesehen ist, welches bei Öffnen der Laserschutztür den Laserbearbeitungskopf automatisch abschaltet. Solche zusätzliche Türen können insbesondere für das Verbringen von schwerem Reparaturgerät oder größeren Werkstücken genutzt werden. Als Laserschutztüren werden oft Schiebetore oder Teleskoptüren eingesetzt. Falls gewünscht kann der Kontrollbereich vor einer solchen zusätzlichen Öffnung über den Gefahrenbereich hinausgehen, d.h. bereits das Herantreten an die zusätzliche Öffnung bewirkt eine Abschaltung des Laserbearbeitungskopfs.

Ebenfalls bevorzugt ist eine Ausführungsform, die vorsieht, dass die im Betrieb von der Bearbeitungszone radial ausgehende Laserstrahlung teilweise vom Werkstück und/oder von einer Werkstückzuführung und/oder vom Laserbearbeitungskopf und/oder von einer Ummantelung des Laserbearbeitungskopfes abgeschattet wird,
und dass die Laserschutzwand teilweise in solchermaßen abgeschatteten Raumwinkelbereichen, insbesondere in bodennahen Abschnitten, offen ausgebildet ist. Die Laserschutzwand kann in dieser Ausführungsform auf die für die Abschattung des Personenbereichs um den Gefahrenbereich herum wesentlichen Raumwinkelbereiche beschränkt werden, d.h. auf diejenigen Raumwinkelbereiche, die noch nicht anderweitig abgeschattet sind. Durch eine "doppelte" Abschattung würde grundsätzlich keine weitere Verbesserung der Personensicherheit erreicht; allerdings muss die Strahlungsausbreitung von der Bearbeitungszone für diese Ausführungsform zuverlässig bekannt sein. Die Laserschutzwand kann dann erheblich verbilligt werden.

Bevorzugt ist auch eine Ausführungsform, bei der der Laserbearbeitungskopf einen Laser mit einer Wellenlänge im nicht sichtbaren Bereich, insbesondere im Infrarotbereich, aufweist. Insbesondere kann der Laser ein Festkörperlaser mit einer Wellenlänge im nahen Infrarot (800 nm bis 1400 nm) sein. Bei nicht sichtbarem Laserlicht ist eine geeignete Abschattung durch eine Laserschutzwand besonders wichtig, da Personen eine Gefährdung durch die Laserstrahlung, einschließlich gestreuter Laserstrahlung, mit ihren Augen nicht wahrnehmen können.

Vorteilhafter Weise weist bei einer Ausführungsform der Laserbearbeitungskopf einen Laser auf, dessen Laserstrahl in vertikaler Richtung, insbesondere nach unten, ausgerichtet ist. Dadurch kann der Ort der Bearbeitungszone allenfalls in vertikaler Richtung variieren, was eine stets azimutal (in Umfangsrichtung) geschlossene oder überlappende Anordnung von Teilabschnitten der Laserschutzwand um die Bearbeitungszone herum leicht möglich macht.

Vorteilhaft ist auch eine Ausführungsform, bei der die Laserbearbeitungsmaschinen-Anordnung mehrere Laserbearbeitungsköpfe aufweist, die von der Laserschutzwand umgeben sind, und die Laserschutzwand und die wenigstens eine Öffnung in der Laserschutzwand so angeordnet sind, dass die wenigstens eine Öffnung mittels der Laserschutzwand von der im Betrieb eines jeden der Laserbearbeitungsköpfe von der jeweils zugehörigen Bearbeitungszone radial ausgehenden Laserstrahlung vollständig abgeschattet ist. Durch Verwendung mehrerer Laserbearbeitungsköpfe im gleichen Gefahrenbereich bzw. Kontrollbereich können oftmals Kostenvorteile erzielt werden. Weiterhin können für unterschiedliche Bearbeitungsanforderungen, etwa für Schneidprozesse und Schweißprozesse, unterschiedliche Laser eingesetzt werden, oder die Bearbeitungskapazität wird einfach vergrößert. Um eine Abschattung bezüglich mehrerer, horizontal gegeneinander versetzter Bearbeitungszonen zu erreichen, kann eine abgeschattete Öffnung am Ende eines im Gefahrenbereich eingerichteten, durch Teilabschnitte der Laserschutzwand flankierten, gebogenen oder geknickten Ganges eingerichtet werden.

Schließlich ist noch eine Ausführungsform bevorzugt, bei der die Laserbearbeitungsmaschinen-Anordnung weiterhin auch einen Stanzkopf im Gefahrenbereich aufweist. Dadurch wird die Werkstückbearbeitung der Anordnung universeller. Eine für die Lasersicherheit und Zugangssicherheit eingerichtete Überwachung kann dann auch die Sicherheit des Stanzprozesses gewährleisten.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Aufsicht auf eine erste Ausführungsform einer erfindungsgemäßen Laserbearbeitungsmaschinen-Anordnung, mit zwei abgeschatteten Öffnungen und zwei zusätzlichen Öffnungen, die jeweils mit einem bogenförmigen Schiebetor verschlossen sind;
- Fig. 2: eine schematische Aufsicht auf die Ausführungsform von Fig. 1, mit geöffneten Schiebetoren;
- Fig. 3: eine schematische, perspektivische Ansicht auf die Ausführungsform von Fig. 2;
- Fig. 4: eine schematische Seitenansicht auf die Ausführungsform von Fig. 2, mit einem vergrößerten Detailausschnitt im Bereich des Laserbearbeitungskopfs;
- Fig. 5: eine schematische Aufsicht auf eine zweite Ausführungsform einer erfindungsgemäßen Laserbearbeitungsmaschinen-Anordnung, die mit einer automatischen Werkstückzuführung versehen ist, mit drei abgeschatteten Öffnungen, und mit einem beweglichen Teilabschnitt der Laserschutzwand in einer geschlossenen Stellung;
- Fig. 6: eine schematische Aufsicht auf die Ausführungsform von Fig. 5, mit dem beweglichen Teilabschnitt in einer geöffneten Stellung;
- Fig. 7: eine schematische, perspektivische Ansicht der Ausführungsform von Fig. 6;
- Fig. 8: eine schematische, perspektivische Ansicht der Ausführungsform von Fig. 5, mit einem Laserschutzschild in einer eingefahrenen Stellung, mit schraffiert markierten, bestrahlten Bereichen der Laserschutzwand;
- Fig. 9: eine schematische, perspektivische Ansicht der Ausführungsform von Fig. 8, mit dem Laserschutzschild in der ausgefahrenen Stellung.

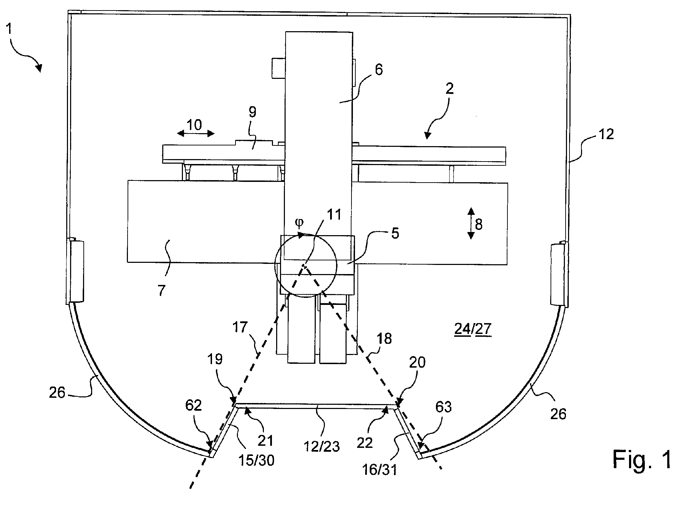

Die **Figuren 1 bis 4** illustrieren eine erste Ausführungsform einer erfindungsgemäßen Laserbearbeitungsmaschinen-Anordnung 1.

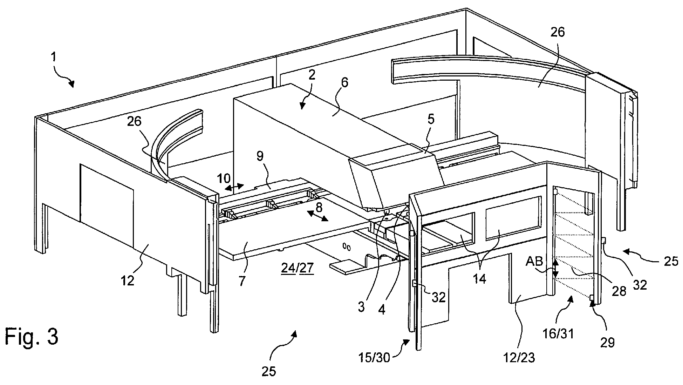

Wie aus den **Fig. 1** und **Fig. 3** ersichtlich, umfasst die Anordnung 1 eine Laserbearbeitungsmaschine 2, hier eine kombinierte Laserbearbeitungs- und Stanzmaschine zur Bearbeitung von Metallblechen. Die Anordnung 1 verfügt über einen Laserbearbeitungskopf 3 und einen Stanzkopf 4, die von einer Fronthaube 5 übergriffen werden und an einem Maschinenkörper 6 angeordnet sind.

Mit dem Laserbearbeitungskopf 3, der einen vertikal nach unten gerichteten Laser umfasst, und dem Stanzkopf 4 können Werkstücke, die auf einer Werkstückauflage 7 angeordnet sind, bearbeitet werden. Die Werkstückauflage 7 kann dabei in Pfeilrichtung 8 nach vorne und hinten verfahren werden, um ein aufliegendes Werkstück (nicht dargestellt) bezüglich der Bearbeitungsköpfe 3, 4 auszurichten. Ebenso kann mittels eines Querträgers 9, der mit Werkstückaufnahmen (hier Klemmen) versehen ist, ein ergriffenes Werkstück in Pfeilrichtung 10 nach links und rechts bewegt werden, um es bezüglich der Bearbeitungsköpfe 3, 4 auszurichten.

Bei der Laserbearbeitung eines Werkstücks trifft der Laserstrahl im Bereich in einer Bearbeitungszone 11, die in Fig. 1 mit einem kleinen, karierten Kreis angedeutet ist, auf das Werkstück. Von dort aus breitet sich Laserstrahlung in alle Richtungen geradlinig aus. Diese radiale Ausbreitung von im Wesentlichen gestreuter Laserstrahlung kann Personen in der Umgebung gefährden, insbesondere deren Augen. Deshalb ist die Laserbearbeitungsmaschine 2 von einer Laserschutzwand 12 umschlossen. Die Laserschutzwand 12 besteht aus für die verwendete Laserstrahlung intransparentem Material, beispielsweise Metallblech, oder im Bereich von Sichtfenstern 14 aus einem speziellen, für die verwendete Laserstrahlung intransparenten Glas. Sichtfenster 14 sind hier in einem Zentralelement 23 der Laserschutzwand 12, vor dem typischerweise auch Bedieneinrichtungen der Anordnung 1 angeordnet sind, ausgebildet.

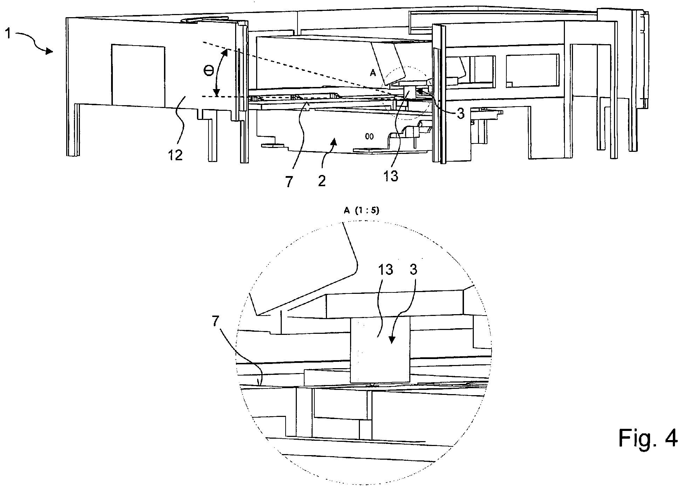

Die Laserschutzwand 12 schirmt hier die Umgebung vollständig um die Bearbeitungszone 11 herum, also über alle Azimutwinkel ϕ von 0 bis 360°, ab. Der abgeschirmte Höhenbereich, also der abgeschirmten Polarwinkel θ, beschränkt sich in der gezeigten Ausführungsform jedoch weitgehend auf den lokalen Strahlungskegel, der sich durch eine Strahlungsbegrenzung bzw. einem Spalt zwischen dem Werkstück und/oder der Werkstückauflage 7 sowie dem Laserbearbeitungskopf 3 und/oder einer rohrförmigen Ummantelung 13 des Laserbearbeitungskopfes 3 ergibt, vgl. dazu die **Fig. 4****.** Insbesondere ist die Laserschutzwand 12 hier überwiegend in einem unteren, bodennahen Teilbereich offen ausgebildet, und weiterhin nach oben hin offen.

Wiederum Bezug nehmend auf **Fig. 1** und **Fig. 3** sind in der Laserschutzwand 12 hier zwei bodentiefe Öffnungen 15, 16 zu beiden Seiten des Zentralelements 23 vorgesehen. Diese Öffnungen 15, 16 sind so in der Laserschutzwand 12 angeordnet, dass durch sie kein von der Bearbeitungszone 11 radial ausgehendes Laserlicht treten kann. In der Fig. 1 sind die den Öffnungen 15, 16 am nächsten kommenden Strahlpfade 17, 18 ausgehend von der Bearbeitungszone 11 gestrichelt eingezeichnet. Ein jeweils vorderer Rand 19, 20 der Öffnungen 15, 16 bzw. ein jeweils angrenzender Teilabschnitt 21, 22 der Laserschutzwand 12 schattet die Öffnungen 15, 16 bis einschließlich des jeweiligen hinteren Rands 62, 63 ab. Für die Augensicherheit von Personen außerhalb des durch die Laserschutzwand 12 umschlossenen Gefahrenbereichs 24 ist es daher nicht erforderlich, die Öffnungen 15, 16 mit für die Laserstrahlung intransparenten Türen zu versehen. Daher sind die Öffnungen 15, 16 hier auch permanent barrierefrei, also ohne Türen, eingerichtet, was die Zugänglichkeit des Gefahrenbereichs 24, etwa bei Rüstprozessen, verbessert.

Um auszuschließen, dass durch die abgeschatteten Öffnungen 15, 16 in den Gefahrenbereich 24 eintretende Personen durch gestreutes Laserlicht gefährdet werden, ist ein Überwachungssystem 29 eingerichtet. Das Überwachungssystem 29 stellt sicher, dass bei Betreten eines Kontrollbereichs 27, der in der gezeigten Ausführungsform mit dem Gefahrenbereich 24 identisch ist, der Laserstrahl des Laserbearbeitungskopfs 3 abgeschaltet wird, und bevorzugt auch ein etwaiger Werkstücktransport und/oder Stanzprozess abgebrochen wird. Die Öffnungen 15, 16 stellen Grenzabschnitte 30, 31 des Kontrollbereichs 27 dar, deren Durchtreten hier jeweils überwacht wird.

An der Öffnung 16 ist hierzu ein Lichtgitter 28 eingerichtet, wobei eine Unterbrechung seines Kontrollstrahls ein Durchtreten des durch die Öffnung 16 ausgebildeten Grenzabschntts 31 signalisiert und die Abschaltung des Lasers auslöst. Dadurch, dass der größte Abstand AB im Lichtgitter ("Rasterung") hier 90 mm beträgt, ist es nicht möglich, unbemerkt auch nur den Kopf in den Gefahrenbereich 24 zu stecken. In gleicher Weise ist die Öffnung 15 gesichert (nicht näher dargestellt).

Außer durch die abgeschatteten Öffnungen 15, 16 kann der Gefahrenbereich 24 auch noch durch zusätzliche Öffnungen 25 betreten werden, die hier mit als Schiebetore ausgebildeten Laserschutztüren 26, die für die verwendete Lasterstrahlung intransparent sind, verschließbar sind. Die Laserschutztüren 26 sind Teil der Laserschutzwand 12 und werden in dieser Ausführungsform für im Wesentlichen manuelle Werkstückwechsel geöffnet.

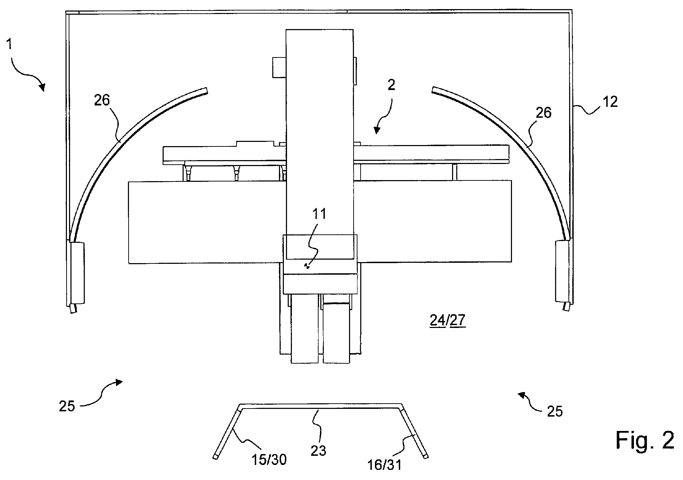

Die Laserschutztüren 26 verfügen hier über ein eigenes Schutzsystem 32, welches ein Öffnen der Laserschutztüren 26 bemerkt, hier jeweils durch einen federbelasteten Druckschalter, und welches bei geöffneter Laserschutztür 26 die Werkstückbearbeitung abbricht, und insbesondere den Laserstrahl am Laserbearbeitungskopf 3 automatisch abschaltet. Alternativ sind die Laserschutztüren 26 elektronisch nur dann entriegelt, wenn der Laser abgeschaltet ist. Während Fig. 1 die Laserschutztüren 26 geschlossen zeigt, sind sie in den Figuren 2, 3 und 4 geöffnet dargestellt. Entsprechend kann nur in dem in Fig. 1 gezeigten Zustand ein Betrieb des Laserbearbeitungskopfs 3 erfolgen. Man beachte, dass die geschlossenen Laserschutztüren 26 minimal mit dem Zentralelement 23 überlappen.

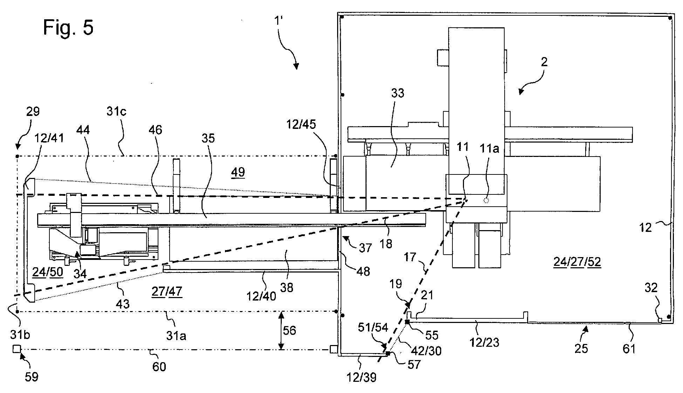

Die **Figuren 5 bis 9** erläutern eine weitere Ausführungsform einer erfindungsgemäßen Laserbearbeitungsmaschinen-Anordnung 1', die mit einer automatischen Werkstückzuführung ("Automation") versehen ist. Es werden vor allem die Unterschiede zur vorhergehenden Ausführungsform erläutert.

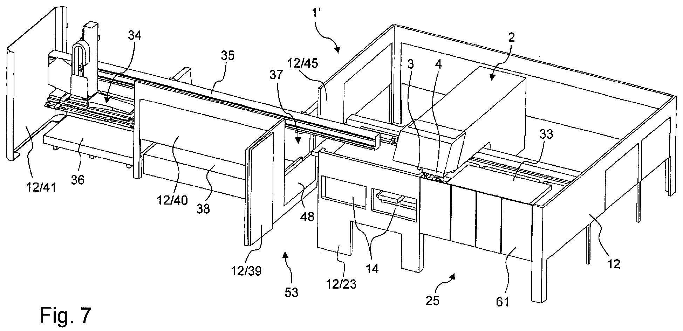

Wie vor allem aus den **Fig. 5** und **Fig. 7** ersichtlich ist, verfügt die Anordnung 1'wiederum über eine Laserbearbeitungsmaschine 2 ähnlich der in Fig. 1 und Fig. 3 gezeigten Laserbearbeitungsmaschine, mit einem Laserbearbeitungskopf 3 und einem Stanzkopf 4 zur Bearbeitung von hier blechartigen Werkstücken 33. Werkstücke 33 werden von einer Ablage für unbearbeitete Werkstücke 36 ("Rohmaterial") mittels eines Sauggreifer-Wagens 34 angehoben und entlang einer Führungsbahn 35 des Sauggreifer-Wagens 34 ("Portal") durch eine Passage 37 zur Laserbearbeitungsmaschine 2 verfahren und abgelegt. Nach der Bearbeitung werden die Werkstücke 33 im Bereich der Laserbearbeitungsmaschine 2 wieder mit dem Sauggreifer-Wagen 34 angehoben und durch die Passage 37 zu einer Ablage für bearbeitete Werkstücke 38 ("Gutteile") verbracht.

Um Personen in der Umgebung der Laserbearbeitungsmaschine 2 vor gestreuter Laserstrahlung zu schützen, ist wiederum eine Laserschutzwand 12 vorgesehen, die für die verwendete Laserstrahlung intransparent ist. Die Laserschutzwand 12 verfügt über eine Vielzahl von Teilabschnitten, hier insbesondere ein Zentralelement 23 mit Sichtscheiben aus für die Laserstrahlung intransparentem Glas, einen beweglichen Teilabschnitt 39, einen ablagenahen Teilabschnitt 40, eine Prallwand 41 und einen passagennahen Teilabschnitt 45. Die Laserschutzwand 12 umgibt einen Gefahrenbereich 24, in welchem von der Bearbeitungszone 11 radial ausbreitende Laserstrahlung auftreten kann, und schirmt diese Laserstrahlung nach außen ab.

Die Laserschutzwand 12 weist hier drei Öffnungen 42, 43, 44 auf, die in Fig. 5 jeweils gepunktet dargestellt sind. Die Laserschutzwand 12 und diese Öffnungen 42, 43, 44 sind so angeordnet, dass ein sich an die Öffnungen 42, 43, 44 anschließender Teilabschnitt der Laserschutzwand 12 die Öffnungen 42, 43, 44 jeweils abschattet. So schattet der in Fig. 5 linke Teilabschnitt 21 des Zentralelements 23 die Öffnung 42 ab, vgl. den öffnungsnächsten Strahlpfad 17 der von der Bearbeitungszone 11 im Betrieb ausgehenden Laserstrahlung. Die Öffnung 43 wird vor allem durch den linken Teil des ablagenahen Teilabschnitts 40 abgeschattet, vgl. den öffnungsnächsten Strahlpfad 18. Die ausgedehnte Öffnung 44 wird vor allem durch den inneren Teil des passagennahen Teilabschnitts 45 abgeschattet, vgl. den öffnungsnächsten Strahlpfad 46. Die Öffnungen 42, 43, 44 benötigen aufgrund ihrer abgeschatteten Anordnung auch bei Betrieb des Laserbearbeitungskopfs 3 keine laserdichte Abdeckung, und sind entsprechend auch barrierefrei ohne eine Tür ausgebildet.

Um Personen, die durch die Öffnungen 42, 43, 44 in den von der Laserschutzwand 12 und den Öffnungen 42, 43, 44 definierten Gefahrenbereich 24 eintreten, vor der Laserstrahlung zu schützen, ist ein hier optisches *Überwachungssystem* 29 (vgl. die schwarz gefüllten Kreise und Vierecke in Fig. 5, die jeweils Lichtgitter- oder Lichtschranken-Stationen darstellen) vorgesehen. Das *Überwachungssystem* 29 überwacht einen Kontrollbereich 27, der den gesamten Gefahrenbereich 24 und noch einen Zusatzbereich 47 vor den Öffnungen 43, 44 umfasst, an seinen Außengrenzen. Die (äußeren) Grenzabschnitte 31a, 31b, 31c des Zusatzbereichs 47 sind in Fig. 5 strichpunktiert dargestellt. Weiterhin stellt die Öffnung 42 einen Grenzabschnitt 30 des Kontrollbereichs 27 dar. Das Überwachungssystem 29 überwacht hier auch noch innenseitig an einigen Teilabschnitten der Laserschutzwand 12.

Mit dem Überwachungssystem 29 kann aufgedeckt werden, wenn eine Person den Kontrollbereich 27 betritt. Insbesondere kann dazu eine Unterbrechung eines Kontrollstrahls, der an den Grenzabschnitten 30, 31a, 31b, 31c beispielsweise ein Lichtgitter bildet, überwacht werden. Bei Durchtreten eines Grenzabschnitts 30, 31a, 31b, 31c wird das Lichtgitter unterbrochen und eine Abschaltung des Lasers im Laserbearbeitungskopf 3 bewirkt. Bevorzugt werden dann auch alle Maschinenbewegungen in der Anordnung 1', etwa des Sauggreifer-Wagens 34, gestoppt.

In der gezeigten Ausführungsform ist auch noch eine zusätzliche, nicht abgeschattete Öffnung 25 vorgesehen, die mit einer als Teleskoptür ausgebildeten Laserschutztür 61 abgedeckt ist. Mit einem Schutzsystem 32, umfassend hier einen federbelasteten Druckschalter, wird sichergestellt, dass bei Öffnen der Laserschutztür 61 der Laserbearbeitungskopf 3 und eine etwaige Maschinenbewegung abgeschaltet wird.

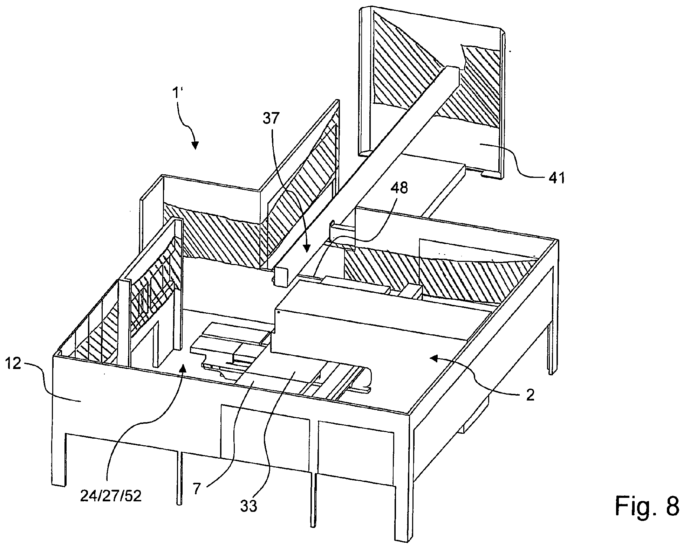

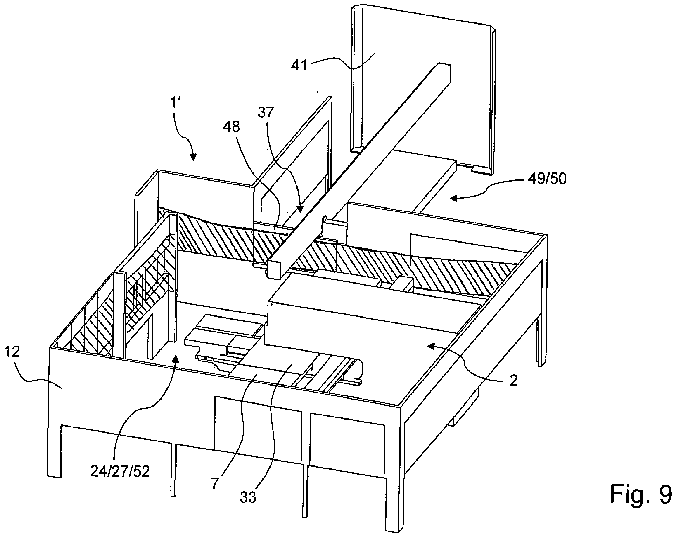

Um die Laserbearbeitungsmaschine 2 effizienter zu machen und insbesondere Maschinenstillstände zu verringern, kann im Bereich der Passage 37 ein beweglicher Laserschutzschild 48 vorgesehen sein, vgl. hierzu **Fig. 9** mit dem Laserschutzschild 48 in ausgefahrener Stellung und **Fig. 8** mit dem Laserschutzschild 48 in eingefahrener Stellung. Bei nach oben ausgefahrenem Laserschutzschild 48 (Hubtor) schattet dieses einen in Fig. 9 hinteren Teilbereich 49 des Kontrollbereichs 27, der jenseits der Passage 37 liegt, und der auch einen hinteren Teilbereich 50 des Gefahrenbereichs 24 umfasst, der jenseits der Passage 37 liegt, ab. Ein Betreten des abgeschatteten Teilbereichs 49 des Kontrollbereichs 27 bzw. des abgeschatteten Teilbereichs 50 des Gefahrenbereichs 24 ist dann gefahrlos möglich, auch wenn die Laserbearbeitung im übrigen Kontrollbereich 52 aktiv ist.

In den Figuren 8 und 9 sind jeweils mit Laserstrahlung bestrahlte Laserwandabschnitte schraffiert eingezeichnet. Bei zurückgezogenem Laserschutzschild 48, vgl. Fig. 8, breitet sich Laserstrahlung bis zum Prallschild 41 aus. Bei ausgefahrenem Laserschutzschild 48 wird die Laserstrahlung am Laserschutzschild 48 blockiert und der Teilbereich 49 vollständig abgeschattet. In den Figuren 8 und 9 ist auch gut ersichtlich, dass die Laserschutzwand 12 nicht bodentief oder deckenhoch benötigt wird, da durch Werkstück 33, Werkstückauflage 7, Laserbearbeitungskopf und/oder Umhüllung des Laserbearbeitungskopfs nur ein relativ kleiner Raumwinkelbereich in vertikaler Richtung (also ein kleiner Polarwinkelbereich) bestrahlt wird.

Bei Verwendung eines beweglichen Strahlungsschilds 48 ist das Überwachungssystem 29 so eingerichtet, dass die Grenzabschnitte 31 a, 31b, 31 c bei ausgefahrenem Laserschutzschild 48 durchtreten werden dürfen, ohne dass die Laserbearbeitung automatisch abgeschaltet wird. Dann kann im abgeschatteten Teilbereich 49 hauptzeitparallel (während der Laserbearbeitung im übrigen Kontrollbereich 52) gearbeitet werden, insbesondere können Werkstücke 33 zur Ablage für unbearbeitete Werkstücke 36 gebracht werden und von der Ablage für bearbeitete Werkstücke 38 entfernt werden.

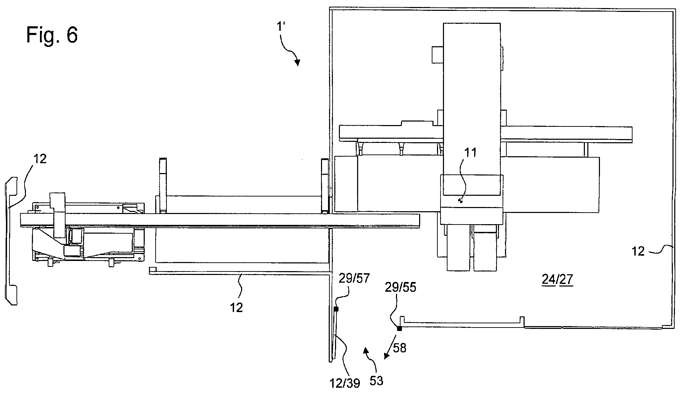

Als weitere Besonderheit der Anordnung 1' grenzt die Öffnung 42 an den beweglichen Teilabschnitt 39 der Laserschutzwand 12, vgl. hierzu **Fig. 5****,** **Fig. 6** und **Fig. 7****.** Wenn der bewegliche Teilabschnitt 39 in eine geöffneten Stellung verschwenkt ist, wie in Fig. 6 oder Fig. 7 dargestellt, ist ein im Vergleich zur abgeschatteten Öffnung 42 vergrößerter Zugang 53 zum Gefahrenbereich 24 eröffnet; der bewegliche Teilabschnitt 39 kann auch als Schwenktor bezeichnet werden. Allerdings muss dann die Abschaltung des Laserbearbeitungskopfs 3 sichergestellt sein, da der vergrößerte Zugang 53 zum größten Teil nicht von Laserlicht abgeschattet ist, das von der Bearbeitungszone 11 im Betrieb ausgehen könnte.

Das Überwachungssystem 29 weist dazu am vorderen Rand 19 der Öffnung 42 ein Sendegerät 55 und am äußeren Ende 54 des beweglichen Teilabschnitts 39 ein Empfangsgerät 57 auf, wobei das ortsfeste Sendegerät 55 seinen Kontrollstahl in eine feste Richtung entsprechend dem Pfeil 58 richtet. Wenn das Empfangsgerät 57 nicht entlang der Pfeilrichtung angeordnet ist, kann das Empfangsgerät 57 den Kontrollstahl nicht empfangen, was eine Meldung der Öffnung 42 bzw. des Grenzabschnitts 30 als frei ausschließt. Ist das Empfangsgerät 57 jedoch entlang der Pfeilrichtung angeordnet, was immer dann der Fall ist, wenn der bewegliche Teilabschnitt 39 in der geschlossenen Stellung ist, vgl. Fig. 5, kann die Öffnung 42 (sofern sich keine Person in der Öffnung 42 aufhält) als frei gemeldet werden, was den Betrieb des Laserbearbeitungskopfs 3 ermöglicht. In letzterem Fall ist das Empfangsgerät 57 an dem dem vorderen Rand 19 gegenüberliegenden Rand 51 der abgeschatteten Öffnung 42 angeordnet. Entsprechend kann in der in Fig. 5 gezeigten geschlossenen Stellung des beweglichen Teilabschnitts 39 eine Laserbearbeitung erfolgen, nicht aber in der in Fig. 6 und Fig. 7 gezeigten geöffneten Stellung des beweglichen Teilabschnitts 39.

Weiterhin ist, wie aus **Fig. 5** ersichtlich ist, vor dem Grenzabschnitt 31a ein Vorwarnabschnitt 60 eingerichtet, der mit einem hier optischen Vorwarnsystem 59 überwacht wird, vgl. die quadratischen, innen weißen Kästchen in Fig. 5. Der Vorwarnabschnitt 60, der mit einer doppelt gepunktet und gestrichelten Linie markiert ist, liegt hier ca. 40 cm vor dem Grenzabschnitt 31a, vgl. Abstand 56. Wird der Vorwarnabschnitt 60 von einer Person durchschritten, wird hier eine Hupe betätigt, welche die Person darauf hinweist, dass eine weitere Annäherung an die Anordnung 1' im Bereich der Automation, insbesondere das Durchtreten des Grenzabschnitts 31a, die Werkstückbearbeitung unterbrechen wird. Dadurch kann ein versehentliches Betreten des Kontrollbereichs 27 während der Werkstückbearbeitung vermieden werden.

Man beachte, dass die Laserbearbeitungsmaschine 2 der Anordnung 1' anstelle eines Stanzkopfs 4 auch einen weiteren Laserbearbeitungskopf aufweisen kann, beispielsweise wobei der zugehörige Laser eine andere Wellenlänge und/oder Leistung als der Laser im Bearbeitungskopf 3 aufweist. Die Öffnungen 42, 43, 44 sind auch bezüglich der weiteren Bearbeitungszone 11a dieses weiteren Laserbearbeitungskopfs abgeschattet angeordnet.

Im Rahmen der vorliegenden Erfindung wird eine Schutzanordnung für eine Laserbearbeitungsmaschine vorgeschlagen, bei der eine Laserschutzwand, die typischerweise vielteilig ausgebildet ist, bezüglich einer Quelle von radial streuendem Laserlicht im Inneren abgeschattete Durchgänge lässt, durch die der Gefahrenraum im Inneren barrierefrei und ohne Zeitverlust betreten und verlassen werden kann. Eine automatische Freigabe der Laserbearbeitung kann erfolgen, wenn eine Maschinenlichtschranke oder dergleichen quittiert wird. Aufgrund der barrierefreien Durchgänge entsteht keine Wartezeit für sich öffnende oder schließende Türen. Ein Bediener hat grundsätzlich beide Hände für Arbeitsaufgaben frei, und benötigt sie insbesondere nicht für eine Türbedienung. Ein Ausfall von Maschinenaktorik an Zugängen braucht nicht befürchtet zu werden, da hier keine Maschinenaktorik benötigt wird. Die Aufstellung von Modulen (Einzelteilen) der Laserschutzwand ist recht flexibel, insbesondere können praktisch beliebige Winkel zwischen einzelnen Modulen realisiert werden, solange nur die Abschattung der (türlosen) Durchgänge bzw. Zugänge gewährleistet ist. Die abgeschatteten (türlosen) Zugänge oder der Gefahrenbereich insgesamt werden überwacht, bevorzugt berührungslos, besonders bevorzugt optisch, etwa mit Lichtschranken oder Lichtgittern. Ebenso ist eine Videoüberwachung, auch 3D-Videoüberwachung denkbar. Durch die Überwachung wird eine Laserabschaltung bei Betreten des Gefahrenbereichs innerhalb der Laserschutzwand automatisch eingerichtet.

### Bezugszeichenliste

- 1, 1': Laserbearbeitungsmaschinen-Anordnung
- 2: Laserbearbeitungsmaschine
- 3: Laserbearbeitungskopf
- 4: Stanzkopf
- 5: Fronthaube
- 6: Maschinenkörper
- 7: Werkstückauflage
- 8: Pfeilrichtung (vorn/hinten)
- 9: Querträger
- 10: Pfeilrichtung (links/rechts)
- 11: Bearbeitungszone
- 12: Laserschutzwand
- 13: Ummantelung
- 14: Sichtfenster
- 15, 16: abgeschattete Öffnung
- 17, 18: öffnungsnächster Strahlpfad
- 19, 20: vorderer Rand
- 21, 22: Teilabschnitt
- 23: Zentralelement
- 24: Gefahrenbereich
- 25: zusätzliche Öffnung
- 26: Laserschutztür (Schiebetor)
- 27: Kontrollbereich
- 28: Lichtgitter
- 29: Überwachungssystem
- 30, 31: Grenzabschnitt
- 31a-31c: Grenzabschnitt
- 32: Schutzsystem
- 33: Werkstück
- 34: Sauggreifer-Wagen
- 35: Führungsbahn
- 36: Ablage für unbearbeitete Werkstücke
- 37: Passage
- 38: Ablage für bearbeitete Werkstücke
- 39: beweglicher Teilabschnitt
- 40: ablagenaher Teilabschnitt
- 41: Prallwand
- 42, 43, 44: abgeschattete Öffnung
- 45: passagenaher Teilabschnitt
- 46: öffnungsnächster Strahlpfad
- 47: Zusatzbereich des Kontrollbereichs
- 48: Laserschutzschild
- 49: abgeschatteter Teilbereich des Kontrollbereichs
- 50: abgeschatteter Teilbereich des Gefahrenbereichs
- 51: gegenüberliegender Rand
- 52: übriger Kontrollbereich
- 53: vergrößerter Zugang
- 54: äußeres Ende des beweglichen Teilabschnitts
- 55: Sendegerät
- 56: Abstand
- 57: Empfangsgerät
- 58: Pfeil (Senderichtung des Kontrollstrahls)
- 59: Vorwarnsystem
- 60: Vorwarnabschnitt
- 61: Laserschutztür (Teleskoptür)
- 62, 63: hinterer Rand
- AB: Abstand (Lichtgitter)
- ϕ: Azimuthwinkel
- θ: Polarwinkel

## Patentansprüche

1. Laserbearbeitungsmaschinen-Anordnung (1; 1'), umfassend
- einen Laserbearbeitungskopf (3) zur Laserbearbeitung eines Werkstücks (33),
wobei im Betrieb des Laserbearbeitungskopfs (3) von einer Bearbeitungszone (11) am Werkstück (33) radial Laserstrahlung ausgeht,
- eine Laserschutzwand (12), welche den Laserbearbeitungskopf (3) und einen Gefahrenbereich (24) um den Laserbearbeitungskopf (3) umgibt, und welche die im Betrieb radial von der Bearbeitungszone (11) ausgehende Laserstrahlung abschirmt, und
- wenigstens eine Öffnung (15, 16; 42, 43, 44) in der Laserschutzwand (12), durch die der Gefahrenbereich (24) betreten werden kann,
**dadurch gekennzeichnet,**
**dass** die Laserschutzwand (12) und die wenigstens eine Öffnung (15, 16; 42, 43, 44) in der Laserschutzwand (12) so angeordnet sind, dass die wenigstens eine Öffnung (15, 16; 42, 43, 44) mittels der Laserschutzwand (12) oder unter Mitwirkung der Laserschutzwand (12) von der im Betrieb des Laserbearbeitungskopfs (3) von der Bearbeitungszone (11) radial ausgehenden Laserstrahlung vollständig abgeschattet ist.

2. Anordnung (1; 1') nach Anspruch 1, **dadurch gekennzeichnet, dass** die wenigstens eine abgeschattete Öffnung (15, 16; 42, 43, 44) barrierefrei ausgebildet ist.

3. Anordnung (1; 1') nach Anspruch 1 oder 2, **dadurch gekennzeichnet, dass** die wenigstens eine abgeschattete Öffnung (15, 16; 42, 43, 44) bodentief und wenigstens 2,20 m hoch oder nach oben offen ist.

4. Anordnung (1; 1') nach einem der vorhergehenden Ansprüche, **dadurch gekennzeichnet, dass** die wenigstens eine abgeschattete Öffnung (15, 16; 42, 43, 44) bezüglich der Bearbeitungszone (11) zumindest teilweise hinter einem abschattenden Teilabschnitt (21, 22, 23, 40, 41, 45) der Laserschutzwand (12) liegt,
insbesondere wobei die abgeschattete Öffnung (15, 16; 42, 43, 44) einen bezüglich des Abstands zur Bearbeitungszone (11) vorderen Rand (19, 20) und hinteren Rand (62, 63) aufweist, und der vordere Rand (19, 20) und der angrenzende Teilabschnitt (21, 22, 23, 40, 41, 45) der Laserschutzwand (12) die Öffnung (15, 16; 42, 43, 44) bis zum hinteren Rand (62, 63) abschattet.

5. Anordnung (1; 1') nach einem der Ansprüche 1 bis 4, **dadurch gekennzeichnet,**
**dass** ein *Überwachungssystem* (29) vorgesehen ist, welches ein Betreten eines Kontrollbereichs (27), welcher zumindest den Gefahrenbereich (24) umfasst, registriert,
und **dass** das Überwachungssystem (29) dazu ausgebildet ist, den Laserbearbeitungskopf (3) automatisch abzuschalten, wenn es ein Betreten des Kontrollbereichs (27) registriert.

6. Anordnung (1; 1') nach Anspruch 5, **dadurch gekennzeichnet, dass** das *Überwachungssystem* (29) ein optisches Überwachungssystem ist, insbesondere wobei das optische *Überwachungssystem* ein Lichtgitter (28) umfasst.

7. Anordnung (1; 1') nach Anspruch 5 oder 6, **dadurch gekennzeichnet,**
**dass** das *Überwachungssystem* (29) wenigstens einen Grenzabschnitt (30, 31; 31 a-31 c) des Kontrollbereichs (27) überwacht, wobei das *Überwachungssystem* (29) einen Betrieb des Laserbearbeitungskopfs (3) nur gestattet, solange der wenigstens eine Grenzabschnitt (30, 31; 31a-31c) als frei gemeldet ist, und der Laserbearbeitungskopf (3) automatisch abgeschaltet wird, sobald der wenigstens eine Grenzabschnitt (30, 31; 31a-31c) durchtreten wird.

8. Anordnung (1; 1') nach Anspruch 7, **dadurch gekennzeichnet,**
**dass** ein Grenzabschnitt (30, 31; 31a-31c) durch eine abgeschattete Öffnung (15, 16; 42, 43, 44) ausgebildet ist,
**dass** ein beweglicher Teilabschnitt (39) der Laserschutzwand (12), welcher diese abgeschattete Öffnung (15, 16; 42, 43, 44) mitbegrenzt, zwischen einer geöffneten Stellung und einer geschlossenen Stellung verfahrbar oder verschwenkbar ist, wobei in der geöffneten Stellung ein im Vergleich zur abgeschatteten Öffnung (15, 16; 42, 43, 44) vergrößerter Zugang (53) zum Gefahrenbereich (24) eröffnet ist, und in der geschlossenen Stellung der Zugang zum Gefahrenbereich (24) auf die abgeschattete Öffnung (15, 16; 42, 43, 44) beschränkt ist,
und **dass** das Überwachungssystem (29) die Meldung dieses Grenzabschnitts (30, 31; 31a-31c) als frei nur gestattet, wenn der bewegliche Teilabschnitt (39) in der geschlossenen Stellung ist.

9. Anordnung (1; 1') nach Anspruch 8, **dadurch gekennzeichnet, dass** das Überwachungssystem (29) zwei Teilgeräte, insbesondere ein Sendergerät (55) und ein Empfängergerät (57), aufweist, und eines dieser Teilgeräte am beweglichen Teilabschnitt (39) der Laserschutzwand (12), insbesondere am Rand (51) der abgeschatteten Öffnung (15, 16; 42, 43, 44), angeordnet ist, und das andere dieser Teilgeräte an einem unbeweglichen Teilabschnitt (23) der Laserschutzwand (12), insbesondere am gegenüberliegenden Rand (19) der abgeschatteten Öffnung (15, 16; 42, 43, 44), angeordnet ist.

10. Anordnung (1; 1') nach einem der Ansprüche 5 bis 9, **dadurch gekennzeichnet, dass** ein Vorwarnsystem (59) vorgesehen ist, welches einen vor einem Grenzabschnitt (30, 31; 31 a-31 c) gelegenen Vorwarnabschnitt (60) überwacht und bei Durchtreten des Vorwarnabschnitts (60) ein optisches und/oder akustisches Vorwarnsignal abgibt, insbesondere wobei der Vorwarnabschnitt (60) wenigstens 40 cm von dem Grenzabschnitt (30, 31; 31a-31c) beabstandet ist.

11. Anordnung (1; 1') nach einem der Ansprüche 5 bis 10, **dadurch gekennzeichnet,**
**dass** wenigstens ein beweglicher Laserschutzschild (48) vorgesehen ist, wobei in einer ausgefahrenen Stellung des Laserschutzschilds (48) ein Teilbereich (49) des Kontrollbereichs (27), der auch einen Teilbereich (50) des Gefahrenbereichs (24) umfasst, von der im Betrieb des Laserbearbeitungskopfs (3) von der Bearbeitungszone (11) radial ausgehenden Laserstrahlung vollständig abgeschattet ist,
und **dass** das Überwachungssystem (29) so eingerichtet ist, dass es mit dem Laserschutzschild (48) in der ausgefahrenen Stellung bei Betreten des Teilbereichs (49) des Kontrollbereichs (27) den Laserbearbeitungskopf (3) nicht automatisch abschaltet, insbesondere wobei vom Teilbereich (49) des Kontrollbereichs (27) aus der übrige Kontrollbereich (52) zumindest mit dem Laserschutzschild (48) in der ausgefahrenen Stellung nicht betreten werden kann.

12. Anordnung (1; 1') nach einem der vorhergehenden Ansprüche, **dadurch gekennzeichnet, dass** die Laserschutzwand (12) weiterhin wenigstens eine mit einer Laserschutztür (26; 61) absperrbare, zusätzliche Öffnung (25) umfasst, durch die der Gefahrenbereich (24) betreten werden kann, und dass ein Schutzsystem (32) vorgesehen ist, welches bei Öffnen der Laserschutztür (26; 61) den Laserbearbeitungskopf (3) automatisch abschaltet.

13. Anordnung (1; 1') nach einem der vorhergehenden Ansprüche, **dadurch gekennzeichnet,**
**dass** die im Betrieb von der Bearbeitungszone (11) radial ausgehende Laserstrahlung teilweise vom Werkstück (33) und/oder von einer Werkstückzuführung und/oder vom Laserbearbeitungskopf (3) und/oder von einer Ummantelung (13) des Laserbearbeitungskopfes (3) abgeschattet wird,
und **dass** die Laserschutzwand (12) teilweise in solchermaßen abgeschatteten Raumwinkelbereichen, insbesondere in bodennahen Abschnitten, offen ausgebildet ist.

14. Anordnung (1; 1') nach einem der vorhergehenden Ansprüche, **dadurch gekennzeichnet, dass** der Laserbearbeitungskopf (3) einen Laser mit einer Wellenlänge im nicht sichtbaren Bereich, insbesondere im Infrarotbereich, aufweist.

15. Anordnung (1; 1') nach einem der vorhergehenden Ansprüche, **dadurch gekennzeichnet, dass** der Laserbearbeitungskopf (3) einen Laser aufweist, dessen Laserstrahl in vertikaler Richtung, insbesondere nach unten, ausgerichtet ist.

16. Anordnung (1; 1') nach einem der vorhergehenden Ansprüche, **dadurch gekennzeichnet, dass** die Laserbearbeitungsmaschinen-Anordnung (1; 1') mehrere Laserbearbeitungsköpfe (3) aufweist, die von der Laserschutzwand (12) umgeben sind, und dass die Laserschutzwand (12) und die wenigstens eine Öffnung (15, 16; 42, 43, 44) in der Laserschutzwand (12) so angeordnet sind, dass die wenigstens eine Öffnung (15, 16; 42, 43, 44) mittels der Laserschutzwand (12) von der im Betrieb eines jeden der Laserbearbeitungsköpfe (3) von der jeweils zugehörigen Bearbeitungszone (11, 11 a) radial ausgehenden Laserstrahlung vollständig abgeschattet ist.

17. Anordnung (1; 1') nach einem der vorhergehenden Ansprüche, **dadurch gekennzeichnet, dass** die Laserbearbeitungsmaschinen-Anordnung (1; 1') weiterhin auch einen Stanzkopf (4) im Gefahrenbereich (24) aufweist.

## Claims

1. Laser processing machine arrangement (1; 1') comprising
- a laser processing head (3) for laser processing a workpiece (33),
laser radiation being emitted radially from a processing zone (11) on the workpiece (33) during operation of the laser processing head (3),
- a laser protection wall (12) which surrounds the laser processing head (3) and a danger region (24) around the laser processing head (3) and which shields the laser radiation which is emitted radially from the processing zone (11) during operation, and
- at least one opening (15, 16; 42, 43, 44) in the laser protection wall (12), through which opening the danger region (24) can be entered,
**characterised in that**,
the laser protection wall (12) and the at least one opening (15, 16; 42, 43, 44) in the laser protection wall (12) are arranged in such a manner that the at least one opening (15, 16; 42, 43, 44) is completely shadowed by the laser protection wall (12) or with the cooperation of the laser protection wall (12) from the laser radiation which is emitted radially from the processing zone (11) during operation of the laser processing head (3).

2. Arrangement (1; 1') according to claim 1, **characterised in that** the at least one shadowed opening (15, 16; 42, 43, 44) is constructed in a barrier-free manner.

3. Arrangement (1; 1') according to claim 1 or claim 2, **characterised in that** the at least one shadowed opening (15, 16; 42, 43, 44) is at floor level and at least 2.20 m high or open in an upward direction.

4. Arrangement (1; 1') according to any one of the preceding claims, **characterised in that** the at least one shadowed opening (15, 16; 42, 43, 44) is located with respect to the processing zone (11) at least partially behind a shadowing part-portion (21, 22, 23, 40, 41, 45) of the laser protection wall (12),
in particular with the shadowed opening (15, 16; 42, 43, 44) having a front edge (19, 20) and a rear edge (62, 63) with respect to the spacing from the processing zone (11), and the front edge (19, 20) and the adjacent part-portion (21, 22, 23, 40, 41, 45) of the laser protection wall (12) shadowing the opening (15, 16; 42, 43, 44) as far as the rear edge (62, 63).

5. Arrangement (1; 1') according to any one of claims 1 to 4, **characterised in that**
there is provided a monitoring system (29) which registers entry of a control region (27) which comprises at least the danger region (24),
and **in that** the monitoring system (29) is constructed to automatically switch off the laser processing head (3) when it registers entry of the control region (27).

6. Arrangement (1; 1') according to claim 5, **characterised in that** the monitoring system (29) is an optical monitoring system, in particular wherein the optical monitoring system comprises a light grille (28).

7. Arrangement (1; 1') according to claim 5 or claim 6, **characterised in that** the monitoring system (29) monitors at least one boundary portion (30, 31; 31a-31c) of the control region (27), the monitoring system (29) permitting operation of the laser processing head (3) only as long as the at least one boundary portion (30, 31; 31a- 31c) is identified as being free, and the laser processing head (3) being automatically switched off as soon as the at least one boundary portion (30, 31; 31a-31c) is entered.

8. Arrangement (1; 1') according to claim 7, **characterised in that** a boundary portion (30, 31; 31a-31c) is formed by a shadowed opening (15, 16; 42, 43, 44),
**in that** a movable part-portion (39) of the laser protection wall (12), which also delimits this shadowed opening (15, 16; 42, 43, 44) is able to be moved or pivoted between an opened position and a closed position, increased access (53) to the danger region (24) being afforded in the opened position in comparison with the shadowed opening (15, 16; 42, 43, 44), and, in the closed position, the access to the danger region (24) being limited to the shadowed opening (15, 16; 42, 43, 44),
and **in that** the monitoring system (29) permits this boundary portion (30, 31; 31a-31c) to be identified as being free only when the movable part-portion (39) is in the closed position.

9. Arrangement (1; 1') according to claim 8, **characterised in that** the monitoring system (29) has two part-devices, in particular a transmission device (55) and a receiving device (57), and one of these part-devices is arranged on the movable part-portion (39) of the laser protection wall (12), in particular on the edge (51) of the shadowed opening (15, 16; 42, 43, 44) and the other of these part-devices is arranged on a non-movable part-portion (23) of the laser protection wall (12), in particular on the opposing edge (19) of the shadowed opening (15, 16; 42, 43, 44).

10. Arrangement (1; 1') according to any one of claims 5 to 9, **characterised in that** there is provided a pre-warning system (59) which monitors a pre-warning portion (60) which is located upstream of a boundary portion (30, 31; 31a-31c) and which transmits an optical and/or acoustic pre-warning signal when the pre-warning portion (60) is entered, in particular with the pre-warning portion (60) being spaced apart from the boundary portion (30, 31; 31a-31c) by at least 40 cm.

11. Arrangement (1; 1') according to any one of claims 5 to 10, **characterised in that**
at least one movable laser protection shield (48) is provided with, in a deployed position of the laser protection shield (48), a part-region (49) of the control region (27), which part-region also comprises a part-region (50) of the danger region (24), being completely shadowed from the laser radiation emitted radially from the processing zone (11) during operation of the laser processing head (3),
and **in that** the monitoring system (29) is configured in such a manner that, with the laser protection shield (48) in the deployed position, it does not automatically switch off the laser processing head (3) when the part-region (49) of the control region (27) is entered, it not being possible in particular to enter the remaining control region (52) from the part-region (49) of the control region (27) at least with the laser protection shield (48) in the deployed position.

12. Arrangement (1; 1') according to any one of the preceding claims, **characterised in that** the laser protection wall (12) further comprises at least one additional opening (25) which can be blocked with a laser protection door (26; 61) and through which the danger region (24) can be entered and **in that** a protection system (32) is provided which automatically switches off the laser processing head (3) when the laser protection door (26; 61) is opened.

13. Arrangement (1; 1') according to any one of the preceding claims, **characterised in that**
the laser radiation which is emitted radially from the processing zone (11) during operation is partially shadowed by the workpiece (33) and/or by a workpiece supply system and/or by the laser processing head (3) and/or by a casing (13) of the laser processing head (3),
and **in that** the laser protection wall (12) partially in such shadowed spatial angular ranges, in particular in portions close to the ground, is constructed to be open.

14. Arrangement (1; 1') according to any one of the preceding claims, **characterised in that** the laser processing head (3) has a laser with a wavelength in the non-visible range, in particular in the infrared range.

15. Arrangement (1; 1') according to any one of the preceding claims, **characterised in that** the laser processing head (3) has a laser whose laser beam is orientated in a vertical direction, in particular in a downward direction.

16. Arrangement (1; 1') according to any one of the preceding claims, **characterised in that** the laser processing machine arrangement (1; 1') has a plurality of laser processing heads (3) which are surrounded by the laser protection wall (12), and **in that** the laser protection wall (12) and the at least one opening (15, 16; 42, 43, 44) in the laser protection wall (12) are arranged in such a manner that the at least one opening (15, 16; 42, 43, 44) is completely shadowed by the laser protection wall (12) from the laser radiation emitted radially from the respective associated processing zone (11, 11a) during operation of each one of the laser processing heads (3).

17. Arrangement (1; 1') according to any one of the preceding claims, **characterised in that** the laser processing machine arrangement (1; 1') further also has a punching head (4) in the danger region (24).

## Revendications

1. Arrangement de machines d'usinage au laser (1 ; 1'), comprenant
- une tête d'usinage au laser (3) destinée à l'usinage au laser d'une pièce (33),
un rayonnement laser émanant radialement depuis une zone d'usinage (11) sur la pièce (33) lors du fonctionnement de la tête d'usinage au laser (3),
- une paroi de protection anti-laser (12) qui entoure la tête d'usinage au laser (3) et une zone de danger (24) autour de la tête d'usinage au laser (3) et qui, en fonctionnement, assure une protection contre le rayonnement laser qui émane radialement depuis la zone d'usinage (11), et
- au moins une ouverture (15, 16 ; 42, 43, 44) dans la paroi de protection anti-laser (12) à travers laquelle peut avoir lieu un accès à la zone de danger (24),
**caractérisé en ce**
**que** la paroi de protection anti-laser (12) et l'au moins une ouverture (15, 16 ; 42, 43, 44) dans la paroi de protection anti-laser (12) sont disposées de telle sorte que l'au moins une ouverture (15, 16 ; 42, 43, 44) est entièrement masquée au moyen de la paroi de protection anti-laser (12), ou avec le concours de la paroi de protection anti-laser (12), du rayonnement laser émanant radialement depuis la zone d'usinage (11) lors du fonctionnement de la tête d'usinage au laser (3).

2. Arrangement (1 ; 1') selon la revendication 1, **caractérisé en ce que** l'au moins une ouverture (15, 16 ; 42, 43, 44) masquée est configurée sans obstacle.

3. Arrangement (1 ; 1') selon la revendication 1 ou 2, **caractérisé en ce que** l'au moins une ouverture (15, 16 ; 42, 43, 44) masquée est ouverte au niveau du sol et sur au moins 2,20 m de hauteur ou vers le haut.

4. Arrangement (1 ; 1') selon l'une des revendications précédentes, **caractérisé en ce que** l'au moins une ouverture (15, 16 ; 42, 43, 44) masquée, par rapport à la zone d'usinage (11), se trouve au moins partiellement derrière une portion partielle masquée (21, 22, 23, 40, 41 ,45) de la paroi de protection anti-laser (12),
l'ouverture (15, 16 ; 42, 43, 44) masquée possédant notamment un bord avant (19, 20) et un bord arrière (62, 63) en référence à l'écart par rapport à la zone d'usinage (11), et le bord avant (19, 20) et la portion partielle masquée (21, 22, 23, 40, 41 ,45) adjacente de la paroi de protection anti-laser (12) masquant l'ouverture (15, 16 ; 42, 43, 44) jusqu'au bord arrière (62, 63).

5. Arrangement (1 ; 1') selon l'une des revendications 1 à 4, **caractérisé en ce**
**qu'**il existe un système de surveillance (29) qui enregistre un accès à une zone de contrôle (27), laquelle englobe au moins la zone de danger (24),
et en ce que le système de surveillance (29) est configuré pour mettre automatiquement hors circuit la tête d'usinage au laser (3) lorsqu'il enregistre un accès à la zone de contrôle (27).

6. Arrangement (1 ; 1') selon la revendication 5, **caractérisé en ce que** le système de surveillance (29) est un système de surveillance optique, le système de surveillance optique comprenant notamment une grille lumineuse (28).

7. Arrangement (1 ; 1') selon la revendication 5 ou 6, **caractérisé en ce que** le système de surveillance (29) surveille au moins une portion de délimitation (30, 31 ; 31a-31c) de la zone de contrôle (27), le système de surveillance (29) n'autorisant un fonctionnement de la tête d'usinage au laser (3) que tant que l'au moins une portion de délimitation (30, 31 ; 31a-31c) est déclarée libre, et la tête d'usinage au laser (3) étant automatiquement mise hors circuit dès que l'au moins une portion de délimitation (30, 31 ; 31a-31c) est franchie.

8. Arrangement (1 ; 1') selon la revendication 7, **caractérisé en ce**
**qu'**une portion de délimitation (30, 31 ; 31a-31c) est formée par une ouverture (15, 16 ; 42, 43, 44) masquée, qu'une portion partielle mobile (39) de la paroi de protection anti-laser (12), laquelle participe à la délimitation de cette ouverture (15, 16 ; 42, 43, 44) masquée, peut être déplacée ou pivotée entre une position ouverte et une position fermée, un accès (53) vers la zone de danger (24) agrandi en comparaison avec l'ouverture (15, 16 ; 42, 43, 44) masquée étant ouvert dans la position ouverte et, dans la position fermée, l'accès vers la zone de danger (24) étant limité à l'ouverture (15, 16 ; 42, 43, 44) masquée,
et **que** le système de surveillance (29) ne permet de signaler que cette portion de délimitation (30, 31 ; 31a-31c) est libre que lorsque la portion partielle mobile (39) se trouve dans la position fermée.

9. Arrangement (1 ; 1') selon la revendication 8, **caractérisé en ce que** le système de surveillance (29) possède deux appareils partiels, notamment un appareil émetteur (55) et un appareil récepteur (57), et l'un de ces appareils partiels est disposé sur la portion partielle mobile (39) de la paroi de protection anti-laser (12), notamment au bord (51) de l'ouverture masquée (15, 16; 42, 43, 44), et l'autre de ces appareils partiels est disposé sur une portion partielle non mobile (23) de la paroi de protection anti-laser (12), notamment au niveau du bord (19) opposé de l'ouverture (15, 16 ; 42, 43, 44) masquée.

10. Arrangement (1 ; 1') selon l'une des revendications 5 à 9, **caractérisé en ce qu'**il existe un système de préalerte (59) qui surveille une portion de préalerte (60) située devant une portion de délimitation (30, 31 ; 31a-31c) et délivre un signal visuel et/ou sonore en cas de franchissement de la portion de préalerte (60), la portion de préalerte (60) étant notamment espacée de 40 cm de la portion de délimitation (30, 31 ; 31a-31c).

11. Arrangement (1 ; 1') selon l'une des revendications 5 à 10, **caractérisé en ce qu'**il existe au moins un écran de protection anti-laser (48) mobile, une zone partielle (49) de la zone de contrôle (27), laquelle englobe également une zone partielle (50) de la zone de danger (24), étant entièrement protégée contre le rayonnement laser émanant radialement depuis la zone d'usinage (11) lors du fonctionnement de la tête d'usinage au laser (3) lorsque l'écran de protection anti-laser (48) se trouve dans une position sortie,
et **en ce que** le système de surveillance (29) est conçu de telle sorte que lorsque l'écran de protection anti-laser (48) se trouve dans la position sortie, il ne met pas automatiquement hors circuit la tête d'usinage au laser (3) en cas d'accès à la zone partielle (49) de la zone de contrôle (27),
l'accès au reste de la zone de contrôle (52) étant notamment impossible depuis la zone partielle (49) de la zone de contrôle (27), au moins lorsque l'écran de protection anti-laser (48) se trouve dans la position sortie.

12. Arrangement (1 ; 1') selon l'une des revendications précédentes, **caractérisé en ce que** la paroi de protection anti-laser (12) comprend en outre au moins une ouverture supplémentaire (25) qui peut être fermée avec une porte de protection anti-laser (26 ; 61), à travers laquelle peut avoir lieu un accès à la zone de danger (24), et **en ce qu'**il existe un système de protection (32) qui met automatiquement hors circuit la tête d'usinage au laser (3) en cas d'ouverture de la porte de protection anti-laser (26 ; 61).

13. Arrangement (1 ; 1') selon l'une des revendications précédentes, **caractérisé en ce que** le rayonnement laser émanant radialement depuis la zone d'usinage (11) lors du fonctionnement est en partie masqué par la pièce (33) et/ou par un mécanisme d'acheminement de la pièce et/ou par la tête d'usinage au laser (3) et/ou par une enveloppe (13) de la tête d'usinage au laser (3),
et que la paroi de protection anti-laser (12) est configurée partiellement ouverte dans les zones d'angle solide ainsi masquées, notamment dans les portions à proximité du sol.

14. Arrangement (1 ; 1') selon l'une des revendications précédentes, **caractérisé en ce que** la tête d'usinage au laser (3) possède un laser ayant une longueur d'onde dans la plage non visible, notamment dans la plage des infrarouges.

15. Arrangement (1 ; 1') selon l'une des revendications précédentes, **caractérisé en ce que** la tête d'usinage au laser (3) possède un laser dont le rayon laser est orienté dans la direction verticale, notamment vers le bas.

16. Arrangement (1 ; 1') selon l'une des revendications précédentes, **caractérisé en ce que** l'arrangement de machines d'usinage au laser (1 ; 1') possède plusieurs têtes d'usinage au laser (3) qui sont entourées par la paroi de protection anti-laser (12), et **en ce que** la paroi de protection anti-laser (12) et l'au moins une ouverture (15, 16 ; 42, 43, 44) dans la paroi de protection anti-laser (12) sont disposées de telle sorte que l'au moins une ouverture (15, 16 ; 42, 43, 44) est entièrement masquée au moyen de la paroi de protection anti-laser (12) du rayonnement laser émanant radialement depuis la zone d'usinage (11, 11a) respectivement correspondante lors du fonctionnement de l'une de toutes les têtes d'usinage au laser (3).

17. Arrangement (1 ; 1') selon l'une des revendications précédentes, **caractérisé en ce que** l'arrangement de machines d'usinage au laser (1 ; 1') possède en outre également une tête de découpage (4) dans la zone de danger (24).
